(19) Europäisches Patentamt
European Patent Office
Office européen des brevets

(11) Veröffentlichungsnummer: **0 065 252**
**B1**

# (12) EUROPÄISCHE PATENTSCHRIFT

(45) Veröffentlichungstag der Patentschrift: **08.08.84**

(51) Int. Cl.[3]: **C 09 B 67/26**, C 09 B 43/00, C 09 B 45/24, C 09 B 33/044, D 06 P 3/32

(21) Anmeldenummer: **82104044.1**

(22) Anmeldetag: **07.05.82**

(54) **Stabile Azofarbstoff-Flüssigeinstellungen.**

(30) Priorität: **20.05.81 DE 3119991**

(43) Veröffentlichungstag der Anmeldung: **24.11.82 Patentblatt 82/47**

(45) Bekanntmachung des Hinweises auf die Patenterteilung: **08.08.84 Patentblatt 84/32**

(84) Benannte Vertragsstaaten: **CH DE FR GB IT LI**

(56) Entgegenhaltungen:
**CH - A - 466 464**
**CH - A - 519 622**
**FR - A - 1 503 833**
**FR - A - 2 123 154**
**GB - A - 1 165 311**

(73) Patentinhaber: **BASF Aktiengesellschaft, Carl-Bosch-Strasse 38, D-6700 Ludwigshafen (DE)**

(72) Erfinder: **Schaffner, Ernst, Dr., Lorscher Ring 16B, D-6710 Frankenthal (DE)**
Erfinder: **Lach, Dietrich, Dr., Gartenweg 16, D-6701 Friedelsheim (DE)**

**EP 0 065 252 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Flüssigfarbstoffe zumal vom Azotyp sind in zahlreichen Patentschriften beschrieben. Dies zeigt, daß solchen Einstellungen von Herstellern und Verbrauchern großes Interesse entgegengebracht wird. Flüssigeinstellungen bieten insbesondere arbeitshygienische und farbrikationsbezogene Vorteile, beispielsweise Staubfreiheit bei der Handhabung, problemlose Dosierung, einwandfreie Löslichkeit, Salzarmut sowie Energieersparnis bei der Herstellung. Aus der DE-C 1 270 207 und der FR-B 1 503 833 sind Azofarbstoffe auf Basis Resorcin, kondensiert mit Aldehyden, bereits seit langem bekannt und als Pulverfarbstoffe im Handel.

Die Erfindung betrifft nun Flüssigeinstellungen solcher Farbstoffe enthaltend 10 bis 40% Kondensationsprodukte von Farbstoffen mit Aldehyden oder aldehydabgebenden Mitteln, Wasser, fabrikationsbedingte Salze und gegebenenfalls bis zu 25% organische wasserverdünnbare Lösungsmittel, wobei die Kondensationsprodukte von Farbstoffen der Formel I

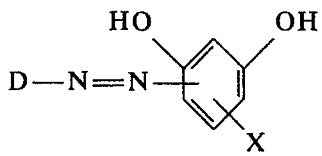

(I)

sowie deren Eisen-, Kupfer-, Nickel-, Kobalt- oder Chrom-Komplexen abgeleitet sind, D den Rest einer vorzugsweisen sulfonsäuregruppenhaltigen Diazokomponente der Anilin- oder Aminonaphthalinreihe und X Wasserstoff oder einen Rest D — N = N— bedeuten und wobei die Reste D gleich oder verschieden sein können.

Die erfindungsgemäßen Flüssigeinstellungen können von gleichen oder verschiedenen Farbstoffen der Formel I abgeleitete Kondensationsprodukte enthalten mit vorzugsweise mindestens einer Sulfonsäuregruppe. X ist vorzugsweise Wasserstoff. Die Reste D können als Substituenten Hydroxylsulfonyl, Nitro, Chlor, Brom, Methyl, Ethyl, Methoxy, Ethoxy oder gegebenenfalls substituiertes Phenylazo enthalten. Vorzugsweise haben sie in o-Stellung zur Azobindung einen zur Metallkomplexbildung befähigenden Substituenten wie Hydroxyl oder Carboxyl.

Einzelne Reste D leiten sich beispielsweise von folgenden Anilin- oder Aminonaphthalinderivaten ab:

2-Naphthochinon-(1)-diazid-(4)-sulfonsäure, 6-Nitro-2-naphthochinon-(1)-diazid-(4)-sulfonsäure,
1-Amino-2-hydroxy-3-nitro-benzol-(5)-sulfonsäure,
1-Amino-2-hydroxy-5-nitrobenzol-(3)-sulfonsäure, 1-Amino-6-hydroxy-benzol-(3)-sulfonsäure,
1-Amino-2-hydroxy-5-chlorbenzol-(3)-sulfonsäure,
1-Amino-2-hydroxy-benzol-(3,5)-di-sulfonsäure, 1-Amino-benzol-(2)-sulfonsäure,
1-Amino-benzol-(3)-sulfonsäure, 1-Amino-benzol-(4)-sulfonsäure,
1-Amino-4-nitrobenzol-(2)-sulfonsäure, 1-Amino-4-methylbenzol-(5)-sulfonsäure,
1-Amino-4-methyl-benzol-(6)-sulfonsäure, 1-Amino-3-chlor-4-methyl-benzol-(6)-sulfonsäure,
1-Amino-benzol-(2,4)-disulfonsäure, 1-Amino-2-carboxy-benzol-(4)-sulfonsäure,
1,4-Diamino-benzol-6-sulfonsäure, 1,3-Diamino-benzol-6-sulfonsäure,
4′-Amino-azobenzolsulfonsäure-(4), 4′-Aminoazobenzoldisulfonsäure-(3′,4),
1-Amino-2-hydroxy-4-nitrobenzol, 1-Amino-2-hydroxy-5-nitrobenzol,
1-Amino-2-hydroxy-5-chlorbenzol, 1-Amino-2-hydroxy-5-methylbenzol,
1-Amino-2-hydroxy-3,5-dinitrobenzol.

Überraschend war, daß sich erfindungsgemäße Flüssigeinstellungen, bei denen Diazotierung, Kupplung, Kondensation und gegebenenfalls Metallisierung in einer Eintropfreaktion vorgenommen werden, dennoch ohne Qualitätsminderung, ja sogar oft mit erheblich besserer Farbstoffausbeute herstellen lassen. Die erfindungsgemäßen Farbstofflösungen sind trotz des durch die Synthese bedingten Salzgehaltes und trotz eines im allgemeinen relativ niedrigen pH-Wertes von 1,0 bis 3,0 lagerstabil, zeigen alle vorerwähnten Vorteile und eignen sich hervorragend beispielsweise zur Färbung von Leder, welches nach verschiedenen Arten gegerbt sein kann.

Die Herstellung der erfindungsgemäßen flüssigen Farbstoffeinstellungen erfolgt zweckmäßigerweise so, daß man die Diazokomponente oder -komponenten in möglichst konzentrierter Form, d. h. im Verhältnis zum Wasser oder zum Wasser-Lösungsmittel-Gemisch 1 : 2 bis 1 : 8 nach an sich bekannten Methoden diazotiert und die Diazoniumverbindungen im Verhältnis 1 : 1 bis 2 : 1 auf Resorcin kuppelt. Gemische von Diazokomponenten können im Gemisch diazotiert und gekuppelt werden, man kann sie jedoch auch nacheinander kuppeln oder man kann sie getrennt auf Resorcin kuppeln und die Kupplungsmischungen anschließend vereinigen. Ohne Zwischenisolierung bzw. nach Vereinigung der Kupplungsmischungen werden die so gebildeten Azofarbstoffe dann wie in den genannten Patentschriften beschrieben mit einem aliphatischen oder aromatischen Aldehyd, vorzugsweise Formaldehyd, bei Gegenwart einer Säure, vorzugsweise Schwefelsäure, kondensiert und gegebenenfalls mit einer Metallverbindung, vorzugsweise Fe (II + III)-, Ni- oder Cu-Sulfat metallisiert, wobei die Reaktionsstufen und die Mengen der Einsatzstoffe so gewählt werden, daß am Ende Farbstoffeinstellungen

erhalten werden, die erfindungsgemäß 10—40%, vorzugsweise 18—25%, kondensierte Azo- oder Azometallkomplexfarbstoffe enthalten. Bei rein wäßriger Arbeitsweise können insbesondere bei der Herstellung kondensierter Metallkomplexfarbstoffe Reaktionsmischungen entstehen, in denen die Farbstoffe nicht vollständig gelöst vorliegen oder die bei Raumtemperatur glasartig erstarren. Man setzt dann zweckmäßigerweise 10—25% wasserverdünnbare Lösungsmittel bezogen auf das Gesamtgewicht zu, um Lösungen zu erhalten oder das Erstarren zu verhindern und die Beständigkeit der Lösungen zu erhöhen.

Zur Diazotierung und Kondensation werden vorzugsweise Mineralsäuren, insbesondere Schwefelsäure, aber auch organische Säuren, wie Ameisen-, Essig- und Chloressigsäure, verwendet. Als Basen bei der Kupplung sind Alkalihydroxide, Ammoniak und alkoxylierte aliphatische oder cycloaliphatische Amine geeignet, vorzugsweise Natronlauge und Ammoniak. Als komplexbildende Salze können Chloride, Sulfate, Formiate oder Acetate von 2- oder 3wertigem Eisen, von Kupfer, Kobalt und Chrom verwendet werden, die Sulfate sind dabei bevorzugt.

Wasserverdünnbare organische Lösungsmittel, die während der Reaktion anwesend sein oder nachträglich zugesetzt werden können, sind beispielsweise Ethanol, Propanol, Butanol, Glykole und Glykolether wie Methyl-, Ethyl- und Propylglykol, aber auch aliphatische und cycloaliphatische Säureamide wie Formamid, Dimethylacetamid und N-Methylpyrrolidon sowie Lactone wie Butyrolacton. Bevorzugt sind Ethylenglykol-monomethylether, -monoethylether und -monopropylether.

In den folgenden Beispielen beziehen sich Angaben über Teile und Prozente, sofern nicht anders vermerkt, auf das Gewicht. Die verwendeten Einsatzstoffe sind im allgemeinen technische Produkte, deren Gehalt in weiten Bereichen schwanken kann, insbesondere werden die verwendeten Diazokomponenten meist in feuchter Form eingesetzt. Zur Charakterisierung sind die Konzentrationen in Prozent in Klammern hinter den betreffenden Stoffen vermerkt. Jedoch beziehen sich die angegebenen Einsatzmengen auf den jeweils ermittelten Reingehalt.

## Beispiel 1

In eine Lösung aus 153 Teilen Wasser und 53 Teilen Natriumhydroxid, läßt man unter Kühlung eine Mischung aus 57,6 Teilen Resorcin und einem Diazoniumsalz einlaufen, das durch Diazotierung von 117 Teilen 1-Amino-2-hydroxy-3-nitro-benzol-(5)-sulfonsäure (84%ig) in 250 Teilen Wasser mit 175 Teilen einer 20,3%igen Natriumnitritlösung bei 0—5° C hergestellt wurde. Die Temperatur steigt auf 30° C an, die Kupplung ist nach kurzer Zeit beendet. In diese Mischung wird nun eine Eisen-(III)-sulfatlösung eingebracht, die man durch Oxidation von 147 Teilen $FeSO_4 \cdot 7\,H_2O$ in 170 Teilen Wasser und 27,6 Teilen 96%iger Schwefelsäure mit 30 Teilen 30%igem Wasserstoffsuperoxid erhält. Man erhitzt eine Stunde auf 60° C, läßt dann eine Mischung aus 50 Teilen Wasser und 53 Teilen 30%igem Formaldehyd zulaufen und erhitzt 2 Stunden auf 90° C. Bei 60° C wird das Gemisch anschließend mit 200 Teilen Ethylenglykolmonoethylether verdünnt. Man filtriert bei Raumtemperatur und erhält 1530 Teile einer stabilen Flüssigfarbstoffeinstellung, die Leder in rotbraunem Ton färbt.

## Beispiel 2

Verfährt man wie in Beispiel 1, ersetzt aber 50% der eingesetzten 1-Amino-2-hydroxy-3-nitro-benzol-(5)-sulfonsäure durch 1-Amino-2-hydroxy-5-nitro-benzol-(3)-sulfonsäure (90%ig), so erhält man eine stabile flüssige Farbstoffeinstellung, die Leder in dunkelbraunem Ton färbt. Um noch konzentriertere Flüssigeinstellungen zu erhalten, kann man die Reaktionsführung so gestalten, daß ein Teil des eingesetzten Wassers verdampft (10—20%). Nach Zugabe von Diethylenglykolmonoethylether fällt dann in der Regel bei 15—20° C ein Teil des in der Farbstofflösung vorhandenen Natriumbisulfats aus und kann durch Filtration entfernt werden.

## Beispiel 3

Verfährt man wie in Beispiel 2, führt aber die Kupplung so durch, daß man eine Lösung von 21,4 Teilen Natronlauge in 21,4 Teilen Wasser in die Mischung aus Resorcin und den Diazoniumsalzen laufen läßt, so erhält man eine flüssige Farbstoffeinstellung, die auf Leder wesentlich tiefere und etwas rötere Färbungen als die nach Beispiel 2 bereitete Flüssigeinstellung ergibt.

## Beispiel 4

73,8 Teile 6-Nitro-2-naphthochinon-(1)-diazid-(4)-sulfonsäure (70%ig) werden zusammen mit 29 Teilen Resorcin in 500 Teilen Wasser angerührt. Die Mischung wird gekühlt und mit 67 Teilen 50%iger Natronlauge allmählich versetzt. Die Temperatur steigt auf 20° C an, die Kupplung ist rasch beendet.

Nun werden 85 Teile Wasser und 72 Teile 96%ige Schwefelsäure zugesetzt und es wird 2 Stunden bei 60°C gerührt. Dann tropft man 51,5 Teile 15,4%ige Formaldehydlösung zu und erhitzt allmählich auf 90°C. Man hält 90 Minuten bei dieser Temperatur, kühlt ab und fügt 200 Teile Ethylenglykolmonoethylether zu. Man filtriert und erhält 1100 Teile eines beständigen Flüssigfarbstoffes, der auf Leder rötliche Braunfärbungen ergibt.

Beispiel 5

In eine Lösung aus 240 Teilen Wasser und 40 Teilen Natriumhydroxyd läßt man unter Kühlung eine Mischung aus 28,8 Teilen Resorcin und einem Diazoniumsalz einlaufen, das durch Diazotierung von 58,5 Teilen 1-Amino-2-hydroxy-3-nitro-benzol-(5)-sulfonsäure (84%ig) in 130 Teilen Wasser mit 87,5 Teilen einer 20%igen Natriumnitritlösung bei 0—5°C hergestellt wurde. Die Kupplung erfolgt praktisch momentan.

Nun stellt man eine Diazoniumsalzmischung her, indem man 38,5 Teile 1-Amino-2-hydroxy-5-nitrobenzol (96%ig) in 150 Teilen Wasser und 39,6 Teilen 96%iger Schwefelsäure mit 88 Teilen einer 20,3%igen Natriumnitritlösung diazotiert. Man läßt diese Mischung zur ersten laufen und stellt mit 21,3 Teilen 50%iger Natronlauge den pH-Wert auf 12. Kurze Zeit danach ist die Kupplung beendet. Man erhitzt dann auf 60°C und fügt eine Eisen-(III)-sulfatlösung zu, die wie in Beispiel 1 hergestellt wurde. Man rührt 2 Stunden bei 60°C, gibt dann 53 Teile 30%ige Formaldehydlösung zu und erhitzt weiter auf 90°C. Danach kühlt man ab und versetzt die Mischung mit 150 Teilen Ethylenglykolmonoethylether. Man filtriert und erhält 1410 Teile eines Flüssigfarbstoffs, der auf Leder rotbraune Färbungen ergibt.

Beispiel 6

58,5 Teile 1-Amino-2-hydroxy-5-nitro-benzol-(3)-sulfonsäure (90%ig) werden in 100 Teilen Wasser unter Kühlung mit 88 Teilen 20,3%iger Natriumnitritlösung diazotiert. Dann werden 28,8 Teile Resorcin zugesetzt und verrührt. Die Mischung läßt man dann zu einer Lösung aus 260 Teilen Wasser und 40 Teilen Natriumhydroxid unter Kühlung zulaufen. Die Kupplung ist rasch beendet. Danach werden 63,3 Teile 1-Amino-benzol-(2,4)-disulfonsäure (77%ig), teilweise vorliegend als Na-Salz, in 220 Teilen Wasser und 39,6 Teilen 96%iger Schwefelsäure mit 88 Teilen Natriumnitritlösung bei 0—5°C diazotiert. Man läßt diese Diazoniumsalzlösung in die zuvor bereitete Kupplungsmischung einlaufen. Die zweite Kupplung ist nach kurzem Rühren beendet. Nun fügt man eine Eisen-(III)-sulfatlösung zu, die aus 72,4 Teilen wasserfreiem Eisen-(II)-sulfat, 100 Teilen Wasser und 27,6 Teilen 96%iger Schwefelsäure durch Oxidation mit 32,4 Teilen Wasserstoffsuperoxidlösung hergestellt wurde, versetzt mit 13,2 Teilen $CuSo_4 \cdot 5\,H_2O$ und erhitzt 2 Stunden auf 60°C. Danach tropft man 53 Teile 30%ige Formaldehydlösung zu und erhitzt 30 Minuten auf 60°C und 2 Stunden auf 90°C. Man kühlt ab, filtriert und erhält 1330 Teile eines Flüssigfarbstoffs, der Leder in einem hellen Braunton färbt.

Beispiel 7

47,3 Teile 1-Amino-6-hydroxy-benzol-(3)-sulfonsäure (92,5%ig) werden in 100 Teilen Wasser entsprechend Beispiel 6 diazotiert und auf Resorcin gekuppelt. Parallel dazu diazotiert man 43,3 Teile 1-Amino-benzol-(4)-sulfonsäure (98%ig) in 100 Teilen Wasser und 39,6 Teilen 96%iger Schwefelsäure mit 88 Teilen 20,3%iger Natriumnitritlösung bei 0—5°C. Man kuppelt dieses Diazoniumsalz mit dem ersten Kupplungsprodukt, indem man die beiden Mischungen vereinigt. Danach wird der Ansatz entsprechend Beispiel 6 mit Eisen-(III)-sulfat, Kupfersulfat und Formaldehyd umgesetzt. Man erhält schließlich 1245 Teile Flüssigfarbstoff, der Leder in einem ansprechenden Mittelbraunton färbt.

**Patentansprüche**

1. Stabile saure Farbstoff-Flüssigeinstellungen mit einem pH-Wert von ungefähr 1 bis 3, enthaltend 10 bis 40% Kondensationsprodukte von Farbstoffen mit Aldehyden oder aldehydabgebenden Mitteln, Wasser, fabrikationsbedingte Salze und gegebenenfalls bis zu 25% organische wasserverdünnbare Lösungsmittel, wobei die Kondensationsprodukte von Farbstoffen der Formel I

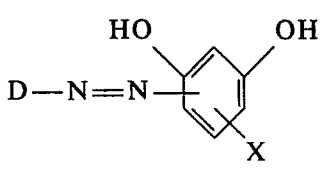

(I)

sowie deren Eisen-, Kupfer-, Nickel-, Kobalt- oder Chromkomplexen abgeleitet sind, D den Rest einer vorzugsweise sulfonsäuregruppenhaltigen Diazokomponente der Anilin- oder Aminonaphthalinreihe und X Wasserstoff oder einen Rest D — N = N— bedeuten und wobei die Reste D gleich oder verschieden sein können.

2. Verwendung der Flüssigeinstellungen gemäß Anspruch 1 zum Färben von Leder.

## Claims

1. Stable liquid acid dye formulations having a pH of from about 1 to 3 which contain from 10 to 40% of condensation products of dyes with aldehydes or aldehyde-donating agents, water and salts which are required or formed during the manufacturing process, with or without up to 25% of organic water-dilutable solvents, the condensation products being derived from dyes of the formula I

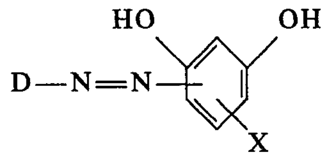

(I)

where D is the radical of a diazo component, preferably containing sulphonic acid groups, of the aniline or aminonaphthalene series, and X is hydrogen or a radical D — N = N—, the D's being identical or different, and from their iron, copper, nickel, cobalt or chromium complexes.

2. The use of the liquid formulations as claimed in claim 1 for dyeing leather.

## Revendications

1. Préparations liquides acides stables de colorants, ayant un pH d'environ 1 à 3, contenant 10 à 40% de produits de condensation de matières colorantes avec des aldéhydes ou des substances donnant des aldéhydes, de l'eau, des sels rendus nécessaires par la fabrication et, le cas échéant jusqu'à 25% de solvants organiques diluables à l'eau, les produits de condensation étant dérivés de matières colorantes de formule I

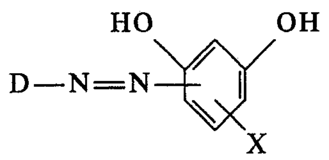

(I)

ainsi que de leurs complexes avec le fer, le nickel, le cuivre, le cobalt ou le chrome, D représentant le radical d'un composant diazoïque de la série de l'aniline ou des aminonaphtalènes, contenant de préférence des groupes acide sulfonique, et X représentant un atome d'hydrogène ou un radical D — N = N—, les radicaux D pouvant être semblables ou différents.

2. Utilisation des préparations liquides selon la revendication 1 pour la teinture de cuirs.